# EUROPEAN PATENT APPLICATION

(11) **EP 3 128 808 A1**
(43) Date of publication of application: **08.02.2017**
(21) Application number: 16182171.5
(22) Date of filing: 01.08.2016
(51) Int. Cl.: H05B 33/08

(54) **LED LIGHTING FOR AN AUTOMOBILE**

(30) Priority: 02.08.2015 US 201514816022
(71) Applicant: Curtis, Henry E., Carterville, IL 62918 (US)
(72) Inventor: Curtis, Henry E., Carterville, IL 62918 (US)
(74) Representative: Romano, Giuseppe

(57) **Abstract**

An LED semiconductor lighting system that comprises a lighting apparatus for illuminating or dimming vehicle interiors and powered by a source of electrical power provided by or on the vehicle or any automobiles. The lighting apparatus comprises reflective strips for an interior space and has a plurality of light emitting diodes and current limiting resistors contained within such interior space of the reflective strips. The illumination and dimming intensity of the light emitting diodes is controlled by a dimming module in electrical contact with the LEDs, touch sensor and electrically connected to the vehicle source of power. An alternative embodiment of the lighting apparatus includes a flexible light tube.

## Description

### FIELD OF THE INVENTION

This invention relates generally to the use of LED light strips with dimmer on a vehicle, and more particularly to an attachable strip with LED lights for an automobile window or the like which provides different daylight and night time visual appearances.

### BACKGROUND OF THE INVENTION

Lighting the interior space of vehicles such as automobile, currently use of fluorescent and other gas discharge system or incandescent light system. Disadvantages of those types of systems include short life time for the light element or bulb, high voltage in the case of gas discharge lighting systems, significant weight, generation of electromagnetic interference and radio frequency interference, heat generation, maintenance costs and fragility of the lighting element or bulb.

For example, fluorescent lights have a relatively short lifetime and a high current draw as compared to some other types of lighting, and in particular in comparison with light-emitting diodes (LEDs). In a typical setting, the fluorescent lights receive power from the transit vehicle's battery, which is usually 24 volts, the output of which is "chopped" to provide an alternating current source. The nature of fluorescent lights leads to high electro-magnetic fields, making compatibility with other electrical equipment challenging. Fluorescent lights also often have problems with arcing, which in turn can pose fire dangers or else blow out electrical components and/or cause power ripples.

One solution that has been used to counter the problems identified above has been to use a light emitting diode (LED), either singularly or in groups. US Patent No. 5,655,830 to Ruskouski suggested a lighting device with LEDs used in exit signs. That disclosure shows the device using a screw type 20 or bayonet type 65 mounting using standard 120 VAC or backup battery power in an exit sign.

US Patent No. 5,193,895 disclosed an invention which is activated when a vehicle door is opened, and which features a low profile strip of light emitting diodes as the source of illumination. Like the inventions that came before it, this invention is automatically activated by a switch that is activated when the door is opened.

US Patent No. 5,528,474 issued to Roney, et al discloses the use of LEDs in the vehicle area, specifically as a taillight or signal light. The LEDs are mounted on a circuit board and then encapsulated in a heat conducting medium. Although color of the LED is not specified, it can be inferred that red and amber are the principal colors for the disclosed uses.

US Patent No. 5,404,282 issued to Klinke, et al discloses the use of a plurality of LEDs, again in automobiles such as the exterior of an automobile. The method of mounting the diodes is to use a cathode and anode bus bar. (See Col. 3, lines 33-46). The disclosure makes general statements that the invention can be used in interior lighting and applications other than automobiles but it gives no teaching or instruction of such other uses. No mention or claim is made concerning the color of the LEDs used. A considerable amount of disclosure deals with the mounting and attachment techniques for the diodes.

The use of LEDs as substitutes for gas discharge or incandescent lights has been limited. As shown above LEDs have been used for external lighting on vehicles or in large outdoor applications. The applied uses have been in relatively large apparatus. In the aircraft industry the use of LEDs as substitute lighting is almost nonexistent. LEDs are used as indicator lights on panels and instruments but not indirect or direct lighting applications. Some of the problems of non-LED lights have been the weight of the devices, short life span of the lighting element, heat dissipation and the generation of electromagnetic interference (EMI) and radio frequency interference (RFI). The latter two problems are especially troublesome in automobiles which require special filtering and insulating elements to avoid or minimize EMI and RFI. That in turn adds weight and uses space both of which are a premium in the interior of an automobile.
Further problems arise because of the relatively short life span of the lighting element, especially in the incandescent light, relating to costs of repair and down time.

### SUMMARY OF THE INVENTION

The present invention, which is defined by the claims set out at the end of this disclosure, is intended to solve the problems noted above.

It is an object of the invention to provide a novel method and apparatus for illuminating a car door window.

It is another object of the invention to provide an effective and easy system to illuminate a car door window which has a relatively simple construction and is easy to install on the glass window of the car.

It is a further object of the invention to provide an apparatus for illuminating a car door having a tinted window with LED lights with dimmer.

The simplest embodiment, reflective strip is positioned on the top of the glass and if needed front portions of the interior of a window frame such that the top and front portions of the door window frame become reflective of other vehicle headlights when the door is either opened or closed with the window either up or down.

In another embodiment, the "Mirror film Tape" is embedded with one or more electrically powered lighting such as LEDs (light emitting diodes). Most of doors of the automobiles having the power for electric window, electric windows or mirrors, it is easy to connect an electrically powered window frame lighting.

The foregoing and related objects are readily attained according to the present invention by the provision of a vehicle window, comprising a window frame for receipt of a window therein and an illuminant component which, when illuminated, with all possible tints. The color spectrum could be selected for one color.

Moreover, the foregoing and related objects are also readily attained according to the present invention by the provision of a vehicle, comprising a tint, that is the combination of all color spectrum to make black when all the LED color lights are on the tint and start brightening of LED light. Single color haze also could be happened when one color light is selected to make the tint less strong for getting signals from the dimmer switch to brighten with more power given to them. Furthermore, driver of the vehicle could also operate LED lightening system through Bluetooth to the vehicle. A touch sensor is also present on the glass of the vehicle's window for controlling the dimming from inside the vehicle, so when the driver or user touches the glass from inside the vehicle the tint get darker and the same sensor is also for the color changing of the LED lights.

Accordingly, certain of the foregoing and related objects are also readily attained according to the present invention by the provision of a method for illuminating a vehicle in the dark as well as dimmer, comprising the steps of providing a vehicle having a touch sensor which allows the driver to touch the glass and glass get darker the tint. This system of dimmer by touching could be work only from inside the vehicle and this is same for the color selection.
Other features and advantages of the present invention will become more apparent from the following detailed description, taken in conjunction with the accompanying drawings which illustrate, by way of example, the principles of the invention. Additional objects and advantages of the invention will become apparent to those skilled in the art upon reference to the detailed description taken in conjunction with the provided figures.

### BRIEF DESCRIPTION OF THE DRAWINGS

To further clarify various aspects of some example embodiments of the present invention, a more particular description of the invention will be rendered by reference to specific embodiments thereof which are illustrated in the appended drawing. It is appreciated that the drawing depicts only illustrated embodiments of the invention and are therefore not to be considered limiting of its scope. The invention will be described and explained with additional specificity and detail through the use of the accompanying drawing in which:

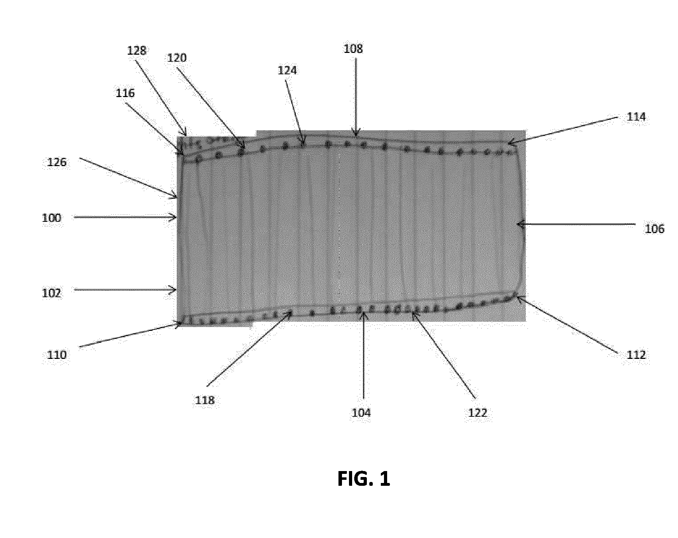

FIG. 1 is a diagram illustrating the improved side elevation view of the exterior of a vehicle door incorporating a illuminant component having a plurality of LED lights.

### DETAIL DESCRIPTION OF THE INVENTION

The following detailed description refers to the accompanying drawings that illustrate the embodiments of the present invention. Other embodiments are possible and modifications may be made to the embodiments without departing from the spirit and scope of the invention. Therefore, the following detailed description is not meant to limit the invention. Rather the scope of the invention is defined by the appended claims.

LED lights are the latest technology in energy efficient lighting. LED stands for 'Light Emitting Diode', a semiconductor device that converts electricity into light. LED lights are high energy efficient, using approximately 85% less energy than halogen or incandescent lighting - meaning significant savings on your power bills. LED lights also have a much longer lifespan than other types of lighting. Energy saving property of LED makes it suitable for lighting inside the vehicle in darker condition as well as in dimmer condition. The LED modules may be connected in daisy chain fashion along the length of the lighting unit.

Referring now to FIG. 1, there is shown a lighting apparatus 100 for illuminating vehicle interiors and powered by a source of electrical power provided by or on a vehicle. The lighting apparatus 100 comprises a mirror film plate 126 or window glass frame of the vehicle, a number of LED lights, a plurality of strips 118 and 120 for the base for mounting of LED lights. The strip 118 has two ends 110 and 112, similarly there are also two ends of 120 is 116 and 114 respectively. Both strips are fixed with plurality of LED lights 112, 124, on entire length. The mirror film plate or vehicle's window glass frame 100 is mounted with the LED assembled strips 118 and 120.

A dimmer 128 is attached to the one end of the window glass frame for dimming the light with reflective strips 118 and 120. The dimmer is easy to handle and installed on the dashboard or column of the vehicle. As the light refracted on the glass, the reflective strips bounces the light back. For controlling the tint LED strips with dimer, Bluetooth is used as an effective tool. The tint is the combination of all color spectrums to make black or darker. Single color haze can only happen when one color LED light is selected to make the tint dark. When the lights get signal from the dimmer switch to brighten by more power given to them. The LED light strips is placed and put on the bottom of the glass. There are sensor systems, which allow the user to darker the tint simply by touching the glass. This method is also applied for the changing the color of the LED lighting apparatus.

All the characteristics of the invention cited above as advantageous, convenient or the like may also be omitted or be replaced with equivalents. The individual characteristics presented with reference to general teachings or particular embodiments may all be present in other embodiments or may replace some characteristics in these embodiments.

It is to be understood that the above description is intended to be illustrative, and not restrictive. For example, the above-discussed embodiments may be used in combination with each other. Many other embodiments will be apparent to those of skill in the art upon reviewing the above description. It is to be understood that the above description is intended to be illustrative, and not restrictive. For example, the above-discussed embodiments may be used in combination with each other. Many other embodiments will be apparent to those of skill in the art upon reviewing the above description.

Plural instances may be provided for components, operations or structures described herein as a single instance. Finally, boundaries between various components are somewhat arbitrary, and particular operations are illustrated in the context of specific illustrative configurations. Other allocations of functionality are envisioned and may fall within the scope of the inventive subject matter. In general, structures and functionality presented as separate components in the exemplary configurations may be implemented as a combined structure or component. Similarly, structures and functionality presented as a single component may be implemented as separate components. These and other variations, modifications, additions, and improvements may fall within the scope of the inventive subject matter.

## Claims

1. A lighting apparatus for illuminating vehicle interiors and powered by a source of electrical power provided by the vehicle, said lighting apparatus comprising:
a window frame provided on a door of a vehicle;
a mirror film tape;
a strip;
a plurality of LED (light emitting diodes);
a dimming module having a voltage regulator electrically connected to the vehicle source of electrical power;

2. The lighting apparatus of claim 1 wherein two ends of the said strip.

3. The lighting apparatus of claim 1 wherein the LED (light emitting diodes) produce light.

4. The lighting apparatus of claim 1 wherein the dimming module comprises a voltage converter electrically connected to the vehicle source of electrical power.

5. The lighting apparatus of claim 1 wherein the LED (light emitting diodes) are mounted on the strip.

6. The lighting apparatus of claim 1 wherein the window frame on a door of a vehicle is mounted with strip fixed with a plurality of LEDs.

7. The lighting apparatus of claim 1 wherein the LED is colored.

8. The lighting apparatus of claim 1 wherein the lighting apparatus works via Bluetooth.

9. The lighting apparatus of claim 1 wherein the lighting apparatus is fixed on the bottom of the window glass of the vehicle.

10. A method for dimming a vehicle, comprising the steps of:
providing a motor vehicle having a door with a window frame for receipt of a window therein, said window frame having a top portion;
providing a dimming component comprising at least one electrically powered light which, when illuminated, can be seen in the light.
